# EUROPEAN PATENT APPLICATION

(11) **EP 4 438 905 A1**
(43) Date of publication of application: **02.10.2024**
(21) Application number: 23166060.6
(22) Date of filing: 31.03.2023
(51) Int. Cl.: F04D 29/02, F04D 29/38, B29C 45/00, B29D 99/00

(54) **FAN BLADE FOR AXIAL FLOW FAN**

(71) Applicant: Luwa Air Engineering AG, 8610 Uster (CH)
(72) Inventor: Remschak, André, 8610 Uster (CH); Grob, David, 8610 Uster (CH)
(74) Representative: Schaad, Balass, Menzl & Partner AG

(57) **Abstract**

The present application relates to a fan blade 10 for an industrial axial flow fan. Said fan blade 10 includes an aerofoil 12 and a blade root 14, the blade root 14 being arranged proximal of the aerofoil 12 and configured for attaching the fan blade 10 to a hub 62 of an axial fan. The aerofoil 12 comprises a tip 22 at a distal end 23 and a base 24 at a proximal end 25, a leading edge 26 and an oppositely disposed trailing edge 28, whereby both edges 26, 28 extend from the tip 22 to the base 24. The aerofoil 12 has a variable thickness defined as a distance between a top surface 30 and a bottom surface 32. In addition, the aerofoil 12 is integrally formed in one piece from a composite material, wherein said composite material includes carbon fibres and a thermoplastic selected from the group of polyamide, polybutylene terephthalate and polypropylene.

## Description

The present application relates to a fan blade for an axial flow fan, in particular for industrial applications, such as in textile plants, and to a respective industrial axial flow fan.

An axial flow fan moves air or gas parallel to the axis of rotation. By comparison, a centrifugal or radial flow fan moves air perpendicular to the axis of rotation. Axial flow fans are better suited for low-resistance, high-flow applications, whereas centrifugal flow fans apply to high-pressure resistance, low-flow conditions.

Axial fans come in different sizes, depending on their application. At the smaller end of the spectrum, axial flow fans serve as table fans or in computers for cooling hard disk drives or other heat-producing components. At the other end, large axial flow fans are used for wind turbines or aircraft propellers. Somewhere in between, large-to-middle size axial flow fans are used in industrial plants for recirculating air, ventilation or cooling purposes.

Depending on the specific application of an axial flow fan, not only demands on performance, stress tolerance, weight and stability of axial flow fans differ substantially, but also the production and maintenance costs. In addition, energy demands rise quickly with the size of the fan. In industrial textile plants, for instance, axial flow fans are the main energy consumers. For that reason, fan design developments have always strived for greater efficiency. It was found that reduced maintenance costs and production costs can often be achieved by enlarging the fans and increasing the air flow generated by the fan blades rather than by increasing the number of fans on a particular industrial plant. On the other hand, increased fan diameters require longer blades and wider chords for increased efficiency, which comes with new challenges as will be explained in the following paragraphs.

The majority of the current fan blades for industrial applications are solid metal construction, generally from aluminium or titanium. Such metal fan blades have the benefit of excellent mechanical properties, long life span and low maintenance costs. On the other hand, with increasing fan size, material costs rise quickly, the fan becomes increasingly heavy, which is one major cause of increased vibrations occurring during fan operation. Additionally, noise production and stresses on the moving part during operation also increase with increased weight of the fan. Therefore, as the fans grow larger, weight reduction becomes increasingly paramount.

One approach for weight reduction is a fan blade construction with a hollow body that utilizes a metal, e.g. titanium, skin over a metal honeycomb core instead of a solid metal fan blade.

Another approach is the use of non-metal materials, in particular high strength composite materials. Composites are a group of materials made from a mixture of metals, ceramics and/or polymers to give a combination of properties that cannot otherwise be achieved by each on their own. Composites generally consist of a reinforcement phase and a matrix phase and, usually, the reinforcement is the stiffer, stronger material which is embedded in a more ductile matrix material. One example is carbon-epoxy composites used in aircraft structures which are mixtures of carbon fibres embedded in epoxy resin. The carbon fibre reinforcement provides the composite with high stiffness and strength while the epoxy resin gives ductility. Used on their own, carbon fibres and epoxy are unsuitable as aircraft structural materials, the fibres being too brittle and the epoxy too weak, but when combined as a composite they create a high-performance material with many excellent properties. Other examples are metal matrix composites, ceramic matrix composites and fibre-metal laminates.

The concept of composite blades has been suggested in the prior art. For instance, US Patent No. 9523280 discloses a fan blade comprising a lightweight core, a composite material disposed on the core, and a skin located on the composite material. The core is fabricated of foam, wood, or any other suitable lightweight material, and is wrapped with a thermoplastic composite material, such as PET, in the form of a tape. Another example is EP 1798418A2 which discloses a fan blade for an axial blade with a blown hollow inlay formed of polyamide that is covered with a layer of carbon-fibre-reinforced plastic.

However, blades comprising a core and a covering structure, are generally complex to manufacture. In addition, many of these blades have suffered from a short lifespan due to delaminations occurring in the blades, in particular in the area of the leading edges, which led to blade failure in relatively short times.

It is therefore an object of the present invention to provide an alternative to the commonly used metal fan blades. The aim is to provide a fan blade for an axial fan, in particular a wide-span blade, with excellent mechanical properties, in particular high strength properties, but with reduced weight, vibration occurrence and manufacturing costs.

In accordance with the present invention, a fan blade for an industrial axial flow fan is provided. Said fan blade includes an aerofoil and a blade root, the blade root being arranged proximal of the aerofoil and configured for attaching the fan blade to a hub of an axial fan. The aerofoil comprises a tip at a distal end and a base at a proximal end, a leading edge and an oppositely disposed trailing edge, whereby both extending from the tip to the base. The aerofoil has a variable thickness defined as a distance between a top surface and a bottom surface. In addition, the aerofoil is integrally formed in one piece from a composite material, wherein said composite material includes carbon fibres and a thermoplastic selected from the group of polyamide, polybutylene terephthalate and polypropylene.

The use of the thermoplastic composite material instead of metal provides the benefit of reduced weight and vibration, increased strength, extended fatigue life, and minimizing problems with corrosion. In particular, compared to common aluminium blades, the thickness of the blade, specifically the aerofoil, could be significantly reduced without compromising stability and stress tolerance of the blade.

In addition, it was found that each of the named thermoplastics, i.e. polyamide, polybutylene terephthalate and polypropylene, can act as a binder, such that the inventive composite material does not require an addition of the commonly used epoxy resins to achieve a stable material connection between the fibres and the thermoplastic.

In line with the present invention, the fan blade is produced as a one-piece integral structure. In particular, it is preferred that the blade is three-dimensionally formed in such a manner that it can be manufactured in an injection moulding process so as to be formed in one piece (monolithic). Compared to a multi-part assembled structure, the integral one-piece design reduces the need of fasteners (such as bolts, rivets, screws etc.), avoids the occurrence of loosening of the fasteners over time and increases the strength of the overall structure. As a result, production and maintenance costs can be reduced.

As mentioned, an axial flow fan with the fan blade of the present invention is intended for use in industrial applications, in particular ventilation systems, e.g. in textile industries. The dimensions of the blade as well as the requirements in terms of stability and pressure tolerance are therefore in clear contrast to those of small cooling fans for domestic use, or to those of propeller blades for use in aircraft applications. In general, it is intended for use in axial flow fans that are driven with low voltage engines, usually of the type having 4 or 6 poles and being operated at a speed of 500-3000 rpm, preferably 1000-1500 rpm (when running at full speed - while noting that such engines can always be used with a frequency converter which allows reducing the speed values).

With respect to the dimensions of the fan blade it is preferred that the aerofoil has a length defined as a distance between the base and the tip, said length being at least 27 cm, preferably 27-70 cm, more preferably 30-55 cm.

With these preferred length ranges the fan blade of the present invention is generally of clearly larger dimensions than blades of cooling fans for domestic use. Therefore, the weight and material reduction offered by the use of the inventive composite material has a significant impact on the production and operation costs of an axial flow fan with the inventive fan blades. On the other hand, with the above-mentioned dimensions, the fan blade can be produced without requiring additional supporting structures, such as ribs, spars or frames that are often required for heavily-loaded propeller blades, e.g. in aircraft applications.

The root has preferably a length of 5-10 cm measured in the proximal-distal direction. It is particularly preferred that the root is integrally formed in one piece with the aerofoil. Particularly preferred is a one-step production of the aerofoil and the root by a moulding technique, in particular injection moulding. Manufacturing of the fan blade does in this case not require fabricating the root and aerofoil as separate components and subsequent connecting thereof, e.g. by welding, screwing or riveting. In addition, no post-processing, e.g. by machining or polishing, blade is required. Thus, the manufacturing process is facilitated and stresses occurring during post-processing can be avoided. Further, without post-processing it enables a production of fan blades with exactly the same dimensions. This is an important factor for producing well-balanced flow fan and for reducing vibrations.

In a preferred embodiment the aerofoil has a chord length defined as an axial distance between the leading edge and the trailing edge, said chord length being at least 15 cm, preferably 15-60 cm, more preferably 25-41 cm.

The chord, as used herein, is the straight line dimension between the trailing edge and the leading edge of the blade. It will grow with the increased blade size. The length of the chord is termed the chord length. With the "axial distance between the leading edge and the trailing edge" is meant the distance between the trailing edge and the point where the chord intersects the leading edge. The use of the inventive composite material enabled producing fan blades with longer chord lengths with high stability, but without the substantial increase in the weight, vibration occurrence and noise production of a resulting axial flow fan that is commonly observed in case of flow fans made from metal.

In a preferred embodiment the maximum thickness of the aerofoil is 3%-10% of the chord length. Most preferably, the maximum thickness is about 5% of the chord length. In clear contrast to e.g. propeller fans for aircraft applications, the maximum thickness of the aerofoil is preferably less than 20 mm. Compared to e.g. aluminium blades used for similar applications, the thickness of the inventive aerofoil could be substantially reduced due to the use of the inventive composite material.

In a preferred embodiment the thermoplastic in the composite material is polyamide, preferably PA6 or PA66. Polyamide, in particular PA6 or PA66 was found to be particularly beneficial in terms of moldability and of providing strength and stability to the produced aerofoil.

In a preferred embodiment the composite material comprises a mixture of carbon fibres and glass fibres. Preferably, the composite material is a hybrid composite including two types of reinforcing fibres. In a preferred embodiment the composite material includes both glass and carbon fibres. Although the strength of glass fibres is generally less than the one of carbon fibres, the provision of a mixture of glass fibres and carbon fibres was found to provide sufficient reinforcement to the thermoplastic, while allowing a reduction of the material costs.

A specific preferred example of a composite material used to form the aerofoil and preferably also the root of the fan blade is a composite material that consists to about 2/5 of fibres and 3/5 of thermoplastic. More specifically, a preferred composite material has the following material composition:
- about 10 weight-% carbon fibres,
- about 30 weight-% glass fibres and
- about 60 weight-% thermoplastic.

The thermoplastic is preferably a polyamide, particularly preferably PA66. The term "about" is to be interpreted as to include deviations of up to 5 weight-%.

In a preferred embodiment the composite material essentially consists of carbon fibres, the thermoplastic and optionally glass fibres. It is thus preferred that the aerofoil, and preferably also the root, is made of a composite material that either essentially consists of carbon fibres and the thermoplastic or essentially consists of carbon fibres, glass fibres and the thermoplastic. The term "essentially consists of" means that the mentioned fibres and the thermoplastic are clearly the main component of the composite material, making up at least 90%, preferably at least 95% of the composite material. Nonetheless, the composite material may contain impurities in terms of a negligible amount of further materials. Such impurities should, however, not alter the overall characteristics of the composite material.

The carbon fibres may have variable lengths. In general, a length of 1-12 mm is preferred. For injection-moulding a fibre length of 1 mm is already rather long. The "longer" fibres provide however the benefit of an increased strength.

Preferably, the fibres have an average length in the range of 2 mm to 4 mm. Again, fibres of a few mm length are beneficial for providing increased stability to the aerofoil.

In one embodiment, longer carbon fibres may be present in a core region of the aerofoil and shorter fibres in peripheral regions. This can be achieved, for instance by producing the aerofoil by injection moulding the composite material around a thin sheet that is prefabricated from carbon fibres and the thermoplastic - as will be explained in more detail further below.

In a preferred embodiment the composite material has a density of less than 1.7 kg/m³. A lower material density is advantageous in view of reduced centrifugal forces and reduced stress to the blade root and impeller hub. In addition, with a material density below 1.7 kg/m³, the composite material used for the inventive fan blade provides the benefit of a significant weight reduction, in particular compared to the commonly used metal-based materials. In consequence, handling, assembly and installation of a resulting axial fan is greatly facilitated and the occurrence of vibrations during fan operation can be significantly reduced.

In a preferred embodiment the thickness of the aerofoil at the trailing edge is less than 3 mm, preferably less than 2, most preferably less than 1.5 mm. The use of the carbon fibre - thermoplastic composite material not only allows an overall reduction in thickness of the aerofoil, but specifically in the areas of the edges. The benefit of thinner edges, in particular the trailing edge, is improved efficiency of an axial flow fan produced with the inventive fan blades.

The trailing edge is preferably thinner as the leading edge. This has the effect that, on the one hand, the leading edge has better strength and can bear the impact of the airflow with a larger wind speed; on the other hand, the trailing blade edge can have a better trail, which can effectively improve the air flow at the trailing side of the blade and reduce the noise. In a preferred embodiment the thickness of the fan blade at the trailing edge is about a third of the thickness at the leading edge.

In a preferred embodiment the trailing edge has a sharp contour. An axial flow fan with fan blades having sharp trailing edges was found to have an increased efficiency, which lowers power consumption and thus operational costs.

It is known that the surface profile of a fan blade has a vital impact on the efficiency of the fan. Though straight edged blades are generally considered to be fairly good for ventilation purposes, they were found to have the disadvantage of high noise levels during operation as their blades cut the air along their whole longitudinal portion at once. It is therefore preferred that the leading edge and/or the trailing edge of the blade are not made straight, but they are given curved geometries for noise reduction. In a particularly preferred embodiment a contour of the leading edge is S-shaped. In other words, if a line is drawn along the leading edge, said line is in the shape of an S. This geometry has been found to be particularly advantageous for reduced noise level as well as for the efficiency.

In a preferred embodiment the aerofoil is a solid body. This means that it does not comprise a cavity or any kind of hollow core structure. Although hollow internal structures are often suggested in the prior art to reduce the material consumption and weight of the blade, they generally increase the complexity of design and production and thus the costs of the blade. Weight reduction of the inventive fan blade is sufficiently achieved by the use of the carbon fibre - thermoplastic composite material, without compromising the blade's stability.

In terms of manufacturing, it is preferred that the aerofoil, preferably the entire fan blade, is formed by injection moulding, whereby the composite material is used as injection moulding material. As mentioned further above, injection moulding allows the production of the aerofoil, or the entire fan blade, an integral, monolithic structure. This avoids a production of separate parts that need to be assembled at a later stage and thus also avoids loosening of such later material connections. In addition, manufacturing by injection moulding avoids additional processing for providing special contours, e.g. recesses or protrusions, which reduces the number of manufacturing steps and thus also the manufacturing costs.

The manufacturing can include injection moulding of the composite material into a mould to form the aerofoil, or preferably the entire fan blade.

Alternatively, the manufacturing may be a two-step process including the preparation of a reinforcement sheet from the composite material, preferably a composite material that essentially consists of carbon fibres and a thermoplastic selected from the group of polyamide, polybutylene terephthalate and polypropylene, which reinforcement sheet is first put into a mould and in a second step, further composite material comprising carbon fibres and the afore-mentioned thermoplastic is injected into the interior of the mould so as to enclose the reinforcement sheet by the injected composite material. Since the reinforcement sheet and the injected composite material contain the same components, a material bond occurs, such that there is no discrete boundary between the sheet and the injected material. As a result, an integral, one-piece full body structure is formed. The pre-fabrication of a carbon fibre - thermoplastic sheet that is enclosed by injection moulding has the advantage that the reinforcement sheet can be produced using long carbon fibres, which enhances the stability of the final aerofoil or blade structure. In addition, the orientation of the fibres in the reinforcement sheet can be adjusted to provide additional strength and stiffness where needed within the fan blade.

As mentioned above, the composite material used for preparing the aerofoil - or more preferably the entire fan blade - by injection moulding preferably consists to at least 90%, preferably at least 95%, of carbon fibres - or a mixture of carbon and glass fibres - and the thermoplastic.

In a further aspect the present invention also relates to an industrial axial flow fan for producing gas flow along the axis of rotation of the fan comprising a number of fan blades as described in the above sections, and a hub to which the fan blades are secured. Thus, each of the fan blades includes a root and an aerofoil, wherein at least the aerofoil is made from a composite material including carbon fibres and a thermoplastic. The preferred embodiments and advantages stated above with reference to the fan blade apply mutatis mutandis to the axial flow fan.

As mentioned earlier, the axial flow fan of the present invention is intended for use in industrial applications, such as in large facility cooling systems or ventilation systems in textile plants. For such applications, axial flow fans with diameters of 0.8 m to 2.0 m are most suitable.

In contrast to domestic axial fans or aircraft engines, the axial flow fan is preferably driven by a low voltage engine, in particular engine having 3 or 4 poles that runs at a maximum speed of 500-3000 rpm, preferably 1000-1500 rpm (notably, such engines can always be used with a frequency converter which allows reducing the speed values). Again in clear contrast to axial fans for aircraft applications, the inventive axial flow fan is preferably driven by an engine having an engine performance (power) in the range of 1-70 kW. The flow rate of the engine is preferably in the range of 5-40 m/s. Preferred flow rates of the inventive axial flow fan are in the range of 8' 000 - 300' 000 m³/h. The fan is preferably operated at a static pressure range of 100-1200 Pa.

The axial flow fan preferably comprises 3 to 12, preferably 5-7, fan blades which are mounted on a circumference of the hub at distances in the circumferential direction. Independent of the exact number of blades it is preferred that the axial flow fan has free-tipped fan blades - i.e., the tips of the fan blades are free from connection with one another. Compared to banded fans, free-tipped fans have the advantages of lower cost, reduced weight, better balance, and advantages due to their reduced inertia, such as lower couple imbalance and lower precession torque.

For attaching the fan blades to the hub, the root of the fan blade is may be shaped as a cylindrical shank. In this embodiment, the hub preferably comprises a number of matching cylindrical recesses, into which the shanks of the blades can be inserted.

The root portion - or the shank in the above embodiment - is preferably prepared by injection moulding together with the aerofoil of the fan blade. Injection moulding allows preparing the shank with recesses, ribs or other defined structures, without post-processing by milling, cutting or the like. This not only facilitates the manufacturing of the blade but also increases its stability and stress resistance.

Preferably, each blade can be fixated to the hub in a number of radial positions, such that the angle of attack of the blades can be adjusted. Fixation of the fan blade on the hub can occur by clamping, screwing or any other method which are well known to a person skilled in the art.

Hereinafter, an embodiment of the present invention will be described in more detail with reference to the drawings, in which
- Fig. 1: shows a perspective view of a fan blade in accordance with a first embodiment of the present invention;
- Fig. 2: shows a perspective view of an impeller of an axial fan comprising five fan blades of Fig. 1;
- Fig. 3: shows the fan blade of Fig. 1 with designated intersecting lines H-H and G-G;
- Fig. 3A: shows a longitudinal section of the fan blade taken along line H-H of Fig. 3;
- Fig. 3B: shows a transverse section of the fan blade taken along line G-G of Fig. 3;
- Fig. 4: shows the fan blade of Fig. 1 from a slightly different perspective, with dashed lines indicating the sectional geometry and thus the thickness profile of the aerofoil at different locations; and
- Figs. 5A and 5B: show perspective views of two further embodiments of the inventive fan blade with different aerofoil designs.

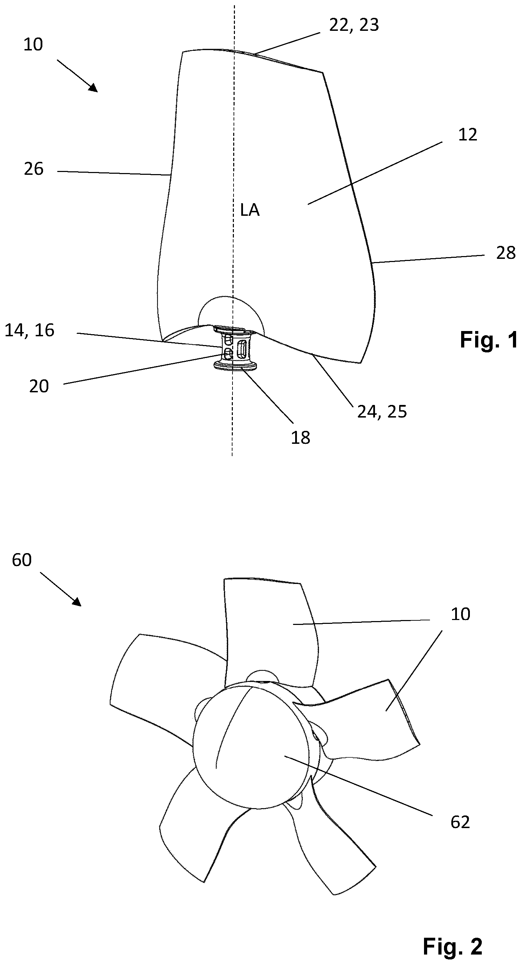

Fig. 1 shows an embodiment of a fan blade 10 for an industrial axial flow fan (see Fig. 2). The fan blade includes an aerofoil 12 and a blade root 14, which are both integrally formed in one piece from a composite material.

The blade root 14 is arranged proximal of the aerofoil 12 and configured for attaching the fan blade 10 to a hub 62 (see Fig. 2) of an axial fan. Specifically, the blade root 14 is in the shape of a shank having a cylindrical neck portion 16 and respective flange portions 18 at both ends. The neck portion comprises a number of recesses 20 that serve for securely attaching the blade to a hub. For attaching the fan blades to the hub, the latter comprises five matching cylindrical recesses, into which the shanks of the blades can be inserted.

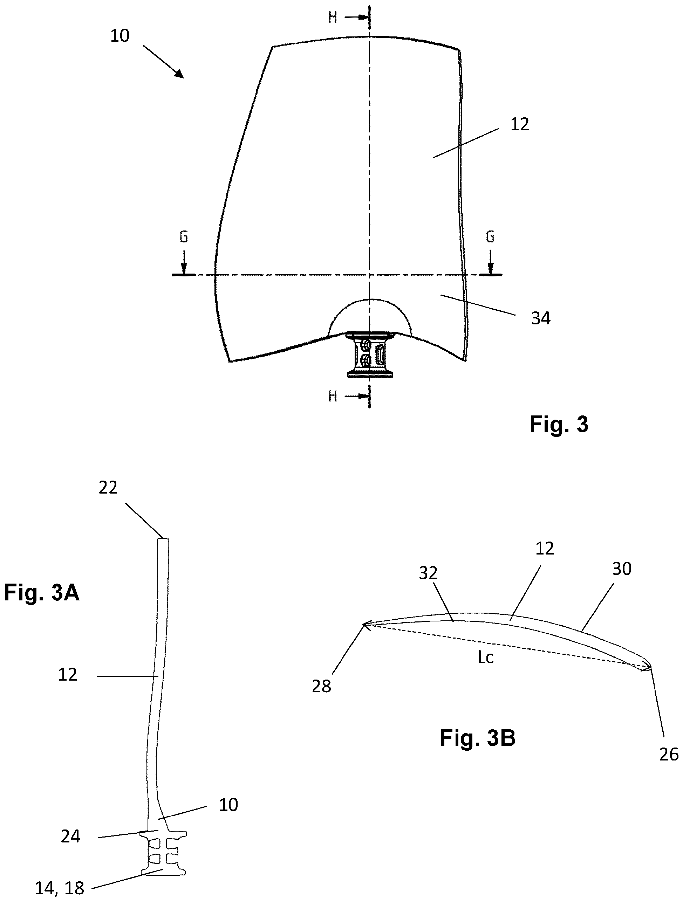

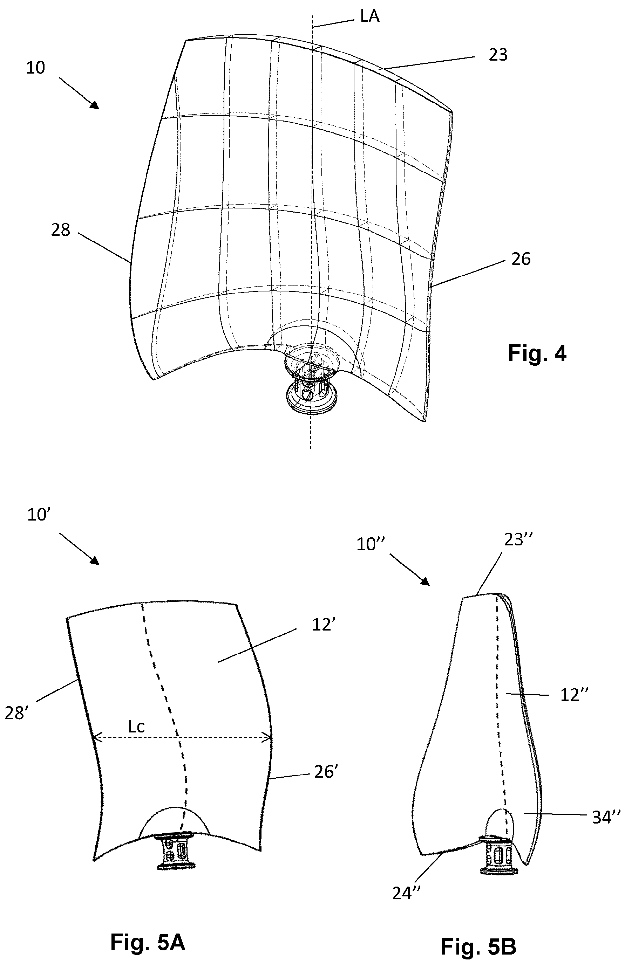

The aerofoil 12 comprises a tip 22 at a distal end 23 and a base 24 at a proximal end 25, a leading edge 26 and an oppositely disposed trailing edge 28, whereby both extend in a longitudinal direction from the tip 22 to the base 24. The leading edge 26 precedes the trailing edge 28 as the axial flow fan rotates in its given direction of rotation. The configuration of the leading and trailing edges 26 and 28, respectively, can be of a variety of known configurations. Preferably, the contour of the leading edge 24 is S-shaped. The aerofoil 12 has a variable thickness defined as a distance between a top surface 30 and a bottom surface 32 (best seen in Figs. 3B and 4).

The composite material used to prepare the fan blade 10, in the shown embodiment including both the aerofoil 12 and the root 14, consists of carbon fibres, glass fibres and polyamide. The use of this composite material allows preparing the fan blade by injection moulding. Compared to traditional metal blades, the weight of the fan blade is significantly reduced. In addition, the composite material allows producing the fan blade with an overall decreased thickness and in particular with thin edge portions, which will be discussed in more detail in connection with Figs. 3A and 3B. The aerofoil 12 has a chord length Lc (see Fig. 3B) defined as an axial distance between the leading edge 26 and the trailing edge 28, said chord length Lc is in the shown embodiment about 35 cm.

Fig. 2 shows an impeller 60 for an axial flow fan comprising a central hub 62 and fan blades 10 of the type shown in Fig. 1. In the illustrated embodiment, five such blades are provided; of course, the number of blades is dictated by the requirements of the particular industrial application. The fan blades 10 are mounted on a circumference of the hub 62 at distances in the circumferential direction. Together with the hub 62, the impeller 60 has a diameter of 1.4 m, wherein the length of the aerofoils 12 (excluding the blade root) is 45 cm. The impeller 60 is driven by a low voltage engine (not shown), said engine has 4 poles and runs at a maximum speed of 1000-1500 rpm and with a performance of 1-55 kW. It produces an air flow of 10k to 180k m³/h and has an airflow rate of 10-30 m/s. The static pressure of the engine is 150-800 Pa.

For the discussion of the thickness profile of the aerofoil 12, Fig. 3 shows the fan blade 10 of Fig. 1 with two intersecting lines: a first intersecting line H-H that runs along the central longitudinal axis L and a second intersecting line G-G that runs in the transverse direction through the aerofoil, specifically in the area of a lower half 34.

Fig. 3A shows a longitudinal section through the fan blade 10 along the intersecting line H-H of Fig. 3. The thickness of the aerofoil 12 in the area of the proximal base 24 is increased for strength purposes and to provide a stable connection to the root. Distal of said proximal base area 24, the thickness of the aerofoil 12 in the longitudinal direction remains more or less constant. Notably, in other, not shown embodiments, the aerofoil may have multiple sections with variable thickness in the longitudinal direction.

The thickness profile of the aerofoil 12 in a transverse section through the lower half 34 of the aerofoil along intersecting line G-G of Fig. 3 is shown in Fig. 3B. In this section the thickness of the aerofoil 12 is largest in proximity to the leading edge 26 and then continuously decreases in the direction from the leading edge 26 to the trailing edge 28. As shown in Fig. 4, different transverse sections through the fan blade 10 can have different thickness distributions, with the thickness varying from the leading edge 26 to the trailing edge 28. It can be seen that in addition to the sectional profile shown in Fig. 3B, the fan blade can have a sectional profile in which the thickness of the aerofoil 12 is thickest in the area around the central longitudinal axis LA and decreases towards both the leading and trailing edges 26, 28.

Overall, the weight distribution is such that it is decreasing towards the trailing edge 28, because the wall thickness of the aerofoil 12 is for the most part also decreasing this way.

In the shown embodiment, the maximum thickness of the aerofoil 12 is about 17 mm. At the trailing edge 28, the thickness of the aerofoil is about 1 mm. The contour of the trailing edge 28 is sharp, which is beneficial in view of the efficiency of the flow fan. At the leading edge 26, the thickness of the aerofoil is about 3 mm. Compared to conventional metal aerofoils of the same size, the overall thickness of the aerofoil is significantly reduced and in particular in the area of the leading and trailing edges. Since not only the required material volume for producing the blade is reduced, but also the density of the composite material is significantly lower compared to metal, the fan blade of the present invention can be made up 80% lighter than a comparable metal blade - without compromising the strength, stress tolerance and lifetime of the fan blade.

As shown in Figs. 5A and 5B, the fan blade of the present invention can be provided with different aerofoil designs. In the embodiment shown in Fig. 5A, the aerofoil 12' has a more or less constant chord length Lc - which is defined as an axial distance between the leading edge and the trailing edge. Alternatively, as shown in Fig. 5B, the aerofoil 12" may also have a chord length that varies along the longitudinal direction. In the shown embodiment of Fig. 5B, the chord length first increases starting from the base 24" of the aerofoil 12" in the distal direction, reaches a maximum in the lower half 34" of the aerofoil and then decreases towards the distal 23'' end of the blade 10" .

It will be understood that the drawings and the above description thereof are used to describe exemplary embodiments of the present invention, yet no limitation of the scope of the invention is thereby intended.

## Claims

1. Fan blade (10) for an industrial axial flow fan, said fan blade including
an aerofoil (12) and a blade root (14), the blade root (14) being arranged proximal of the aerofoil (12) and configured for attaching the fan blade (10) to a hub (62) of an axial flow fan,
the aerofoil (12) comprising
a tip (22) at a distal end (23) and a base (24) at a proximal end (25),
a leading edge (26) and an oppositely disposed trailing edge (28), both extending from the tip (22) to the base (24),
the aerofoil (12) having a variable thickness defined as a distance between a top surface (30) and a bottom surface (32),
wherein the aerofoil (12) is integrally formed in one piece from a composite material, said composite material including carbon fibres and a thermoplastic selected from the group of polyamide, polybutylene terephthalate and polypropylene.

2. Fan blade according to Claim 1, wherein the aerofoil (12) has a length defined as a distance between the base (24) and the tip (22), said length being at least 27 cm, preferably 27-70 cm, more preferably 30-55 cm.

3. Fan blade according to Claim 1 or 2, wherein the root (14) is integrally formed in one piece with the aerofoil (12) and preferably having a length of 5-10 cm measured in the proximal-distal direction.

4. Fan blade according to any of the preceding claims, wherein the aerofoil (12) has a chord length (Lc) defined as an axial distance between the leading edge (26) and the trailing edge (28), said chord length (Lc) being at least 15 cm, preferably 15-60 cm, more preferably 25-41 cm.

5. Fan blade according to any of the preceding claims, wherein the thermoplastic polyamide, preferably PA6 or PA66.

6. Fan blade according to any of the preceding claims, wherein the composite material comprises a mixture of carbon fibres and glass fibres.

7. Fan blade according to any of the preceding claims, wherein the composite material essentially consists of carbon fibres, the thermoplastic and optionally glass fibres.

8. Fan blade according to any of the preceding claims, wherein the composite material has a density of less than 1.7 kg/m3.

9. Fan blade according to any of the preceding claims, wherein the maximum thickness of the aerofoil (12) is 3%-10% of the chord length, preferably less than 20 mm.

10. Fan blade according to any of the preceding claims, wherein the thickness of the aerofoil (12) at the trailing edge (28) is less than 3 mm, preferably less than 2 mm, most preferably less than 1.5 mm.

11. Fan blade according to any of the preceding claims, wherein a contour of the leading edge (26) is S-shaped.

12. Fan blade according to any of the preceding claims, wherein the aerofoil (12) is a solid body.

13. Fan blade according to any of the preceding claims, wherein the aerofoil (12), preferably the entire fan blade (10), is formed by injection moulding, whereby the composite material is used as injection moulding material.

14. Method for producing a fan blade (10) for an industrial axial flow fan according to any of the preceding claims by injection moulding a composite material including carbon fibres and a thermoplastic selected from the group of polyamide, polybutylene terephthalate and polypropylene; or by placing a reinforcement sheet prepared from a composite material including carbon fibres and a thermoplastic selected from the group of polyamide, polybutylene terephthalate and polypropylene into a mould and injecting additional composite material to surround the sheet.

15. An industrial axial flow fan for producing gas flow along the axis of rotation of the fan comprising a number of fan blades (10) as claimed in any of Claims 1 to 14, and a hub (62) to which the fan blades (10) are secured.
